# EUROPEAN PATENT APPLICATION

(11) **EP 1 111 526 A2**
(43) Date of publication of application: **27.06.2001**
(21) Application number: 00309992.6
(22) Date of filing: 09.11.2000
(51) Int. Cl.: G06F 17/60

(54) **Dynamic distributed resources management system and method of provisioning therefor**

(30) Priority: 21.12.1999 US 469142; 24.03.2000 US 535485
(71) Applicant: NORTEL NETWORKS CORPORATION, Montreal, Quebec H2Y 3Y4 (CA)
(72) Inventor: Guinane, Gerry, Galway (IE); Hickey, Linda, Galway (IE); Sheridan, Tony, Dublin (IE)
(74) Representative: Anderson, Angela

(57) **Abstract**

A call centre (10) has an automated system (50, 52) for managing home agent (32-38) and fixed agent (14-18) (i.e. located with the call centre) resources. A home agent server (50) located in the call centre (10) collects information (53) regarding the current call centre load, on availability of home agents for immediate or future work, certain thresholds determined via a supervisor interface (54) and information about the skills of available home and fixed agents stored in an agent database (56). If provisioned levels of service are inadequate, then the home agent server (50) instructs additional home agents to log on and receive incoming calls via the call centre (12).

## Description

### Background to the Invention

This invention relates, in general, to a system and mechanism for managing a combination of remote or home agent (or 'teleworker') and local or fixed agent resources in the context of a distributed resources management service. This invention is particularly, but not exclusively, concerned with automatically managing remote agent resources in response to a varying load of incoming enquiries to the system, and allowing remote agent resources to interact dynamically thereafter.

### Summary of the Prior Art

There are many distributed resources systems which exist today. A typical and easily understood example is a call centre. The following description will describe the call centre example in more detail. However it will be understood that the features of the example could apply equally to other distributed resources systems.

A call centre usually consists of a computerised automatic call distribution (ACD) system and a private branch exchange (PBX), which enables a group of local or fixed agents at assigned terminals in an office environment to handle a number of inbound calls. Customers calling the call centre may listen to recordings, request access to particular qualified groups of agents using, for example, tones from a touch tone telephone and queue to speak to an agent, usually on a first-come-first-served basis. Call centres are utilised across a wide range of business interests, including (but not limited to) technical help desks, financial services and telemarketing agencies. Fully featured call centres allow for such things as statistical monitoring of call answering rates. Call centre management techniques may also allow agents, call centre supervisors or customers to arrange a call-back, where an agent, perhaps specifically designated or qualified, may call a customer at a pre-arranged time.

It is also known to have call centre teleworking which involves a plurality of remote or home agents each in a small office-home office (SOHO) environment which replicates the fixed agent telephony and computing environment in, for example, the home. Such call centre teleworking is an increasingly attractive technology due to factors such as staff retention, permitting more flexible call centre operations and a reduction in overhead costs. There is also a trend towards greater numbers and proportions of agents choosing part time working and so office function and general disruption during shift changes can be minimised.

The background technology environment is currently showing significant growth trends in the key areas of call centres and telecommuting with data sources predicting 15-20% growth in call centre agent positions in Europe and 10% increase in telecommuting in the USA over each of the next two to three years.

Supervisors at the call centre are presently required manually to establish agent resource requirements. Indeed, supervisors must consider a variety of aspects such as the incoming call load, the number of both fixed and home agents available and possibly also the agents' particular skills. If necessary the call centre supervisor will then decide to contact a number of home agents by directly establishing contact or requesting log on, thereby to augment capacity and call handling (but generally only in a reactive fashion). Thus the call centre supervisor is required to constantly monitor the agent resource requirement and take action when necessary.

Clearly, therefore, there are many variables that the call centre supervisor must consider and their individual judgement concerning the resources required may not optimise the efficacy of the call centre operation. Furthermore, teleworkers presently rely on the call centre (and especially the call centre supervisor) to establish contact with them, whilst the call centre supervisor must also determine whether the individual teleworkers are available for work at that time (which is not always the case). Consequently, the polling of teleworkers is not always productive and does not always secure additional home agent resources to address instantaneous call-handling problems.

US patent 5,519,773 describes a method of multiplexing inbound and outbound calls in a call centre by assigning a call-back or an unsolicited outbound call to an idle agent. US patent 5,499,291 describes a call management system which enables a supervisor to monitor an agent's schedule and communicate directly via a terminal.

In overview, the present invention provides an automated, real time, dynamic system and operating methodology for managing and integrating both fixed and home agent resources to optimise call centre operation.

### Summary of the invention

According to a first aspect of the present invention, there is provided a method of managing a distributed resources management system arranged to provision for a level of service supported by local resources and a pool of remote resources, the method comprising storing in a database a profile of the local resources and the remote resources; assessing an operational status of the system in relation to a provision of service to clients; and automatically adjusting an allocation of local resources and remote resources that support the provision of service subject to the operational status of the system.

In a preferred embodiment the method further comprises automatically adjusting a number of remote agent resources that support the provision of service to clients based on the operational status of the system.

In another embodiment the method further comprises at least one of (a) releasing remote resources when a provisioned level of service exceeds the operational status of the system; (b) re-assigning resources to support system originating duties; and (c) identifying, from the database, available remote resources presently not engaged by the system and instructing such remote resources to connect, thereby making provision for a level of service perceived necessary for the system having regard to the operational status.

According to a second aspect of the present invention there is provided a computer program product for a processor-controlled distributed resources management system, the computer program product comprising code that directs the processor-controlled management system to store in a database a profile of local resources and the remote resources; code that directs the processor-controlled management system to assess an operational status of the system in relation to a provision of service; and code that directs the processor-controlled management system to adjust automatically an allocation of local resources and remote resources that support the provision of service subject to the operational status of the system.

According to a third aspect of the present invention, there is provided a computer program article for use in combination with a distributed resources management system and a database arranged to provision for a level of service supported by local resources and a pool of remote resources, comprising executable code configured to store in the database a profile of the local resources and the remote resources; executable code configured to assess an operational status of the system in relation to a provision of service; and executable code configured to adjust automatically an allocation of local resources and remote resources that support the provision of service subject to the operational status of the system; wherein the executable codes reside on a tangible medium.

According to a further aspect of the present invention there is provided a distributed resources management system operationally configured to receive queries from clients interconnected thereto, the system having available thereto a plurality of local agent resources and a pool of remote agent resources and wherein the system comprises a database having stored therein a profile of the local agent resources and the remote agent resources; a management system arranged to provision for a level of service supported by the local agent resources and the pool of remote agent resources, the management system having a resourcing tool for assessing an operational status of the system in relation to a provision of service to clients; and means for automatically adjusting an allocation of local agent resources and remote agent resources that support the provision of service to clients subject to the operational status of the system.

Advantageously, the present invention provides a system which mitigates the potential for errors in human judgement concerning the volume and type of agent resources required to support fully the efficient operation of a system. Furthermore the remote agents can be proactive in their interaction with the system, with the remote agent able to log on via a suitable data telecommunications network linked to the system and define the hours they are available to work. Subsequently, the dynamic call centre management system of the preferred embodiment determines whether additional (or fewer) agent resources are required to handle the call centre load and accordingly adjusts a provisioning of resources. If additional resources are required, the dynamic call centre system of the preferred embodiment provides a polling function to locate currently available remote agent resources. The supervisor can then instruct the system to contact the relevant remote agents, requesting that they log on and begin receiving incoming calls from the call centre load. Alternatively, when the incoming call load declines, the supervisor may instruct the system to schedule both local and/or remote agents to make outgoing calls (for the purposes of marketing or call-back).

### Brief Description of the Drawings

An exemplary embodiment of the present invention will now be described with reference to the accompanying drawings, in which:
- FIG.1: is a block diagram of the system architecture of a preferred embodiment of the present invention, which system architecture contains a call centre and connected teleworking resources;
- FIG.2: is a block diagram of a preferred architecture of the home agent server of FIG.1; and
- FIG.3: is a flow diagram illustrating a preferred operating method employed within the system architecture of FIG.1 and home agent server of FIG.2.

### Detailed Description of a Preferred Embodiment

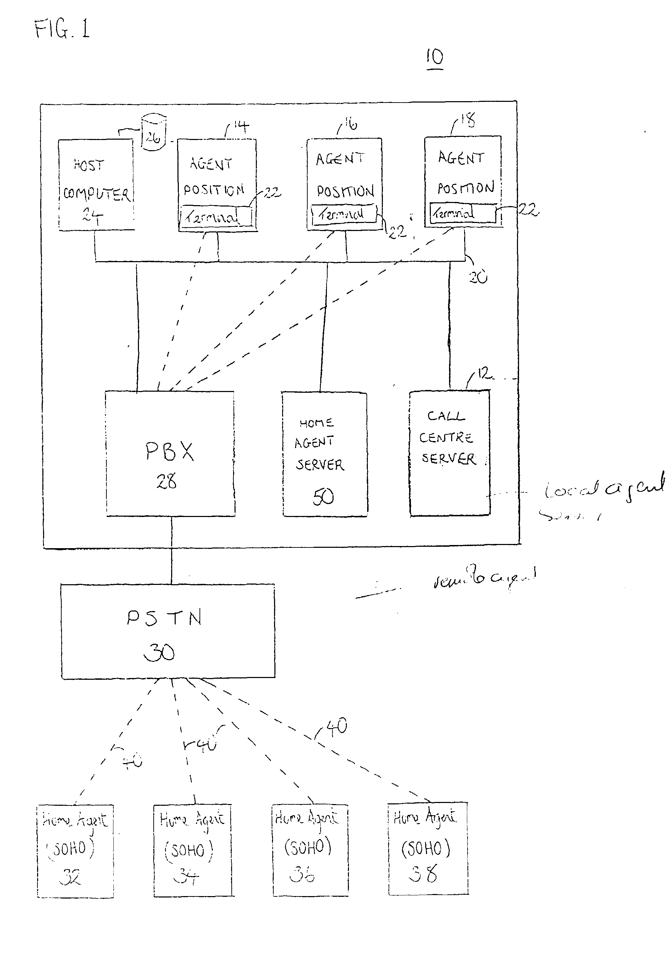

FIG.1 illustrates a call centre architecture 10 of a preferred embodiment of the present invention.

The call centre architecture contains a call centre server 12 that generally compiles real-time statistics on the operational status of the call centre, in general. The call centre server generally interacts with a plurality of fixed agent positions 14-18 through a local area network (LAN) 20. The fixed agent positions 14-18 each support a terminal 22 that provides an interrogation point / service interface to customer enquiries generated externally to the call centre. Each terminal 22 has access, through the LAN 20, to a host computer 24 that may provide ancillary functionality to each terminal, but at least serves as a gateway to a database 26 storing historically compiled data or service system information. Further, said database 26 stores a profile of the fixed agent and home agent resources. The various agent positions will also have access to a private branch exchange (PBX) 28 typically via dedicated connections, such as twisted pairs, although the LAN 20 could also support protocols such as voice over the internet protocol (VolP) to allow access by each of the plurality of agent positions 14-18 to a public switched telephone network 30 (or the like) via the PBX 28.

In more detail, the call centre server 12 provides real time (and historic, if necessary) data to supervisors on the performance of agents and implements the routing of calls to agents. The latter decision may be based, for example, on the particular skills of the available agents or longest wait time for callers. Also, the real-time statistics include service requirements identified as being demanded by clients accessing the call centre. Furthermore the supervisor can configure such criteria and set thresholds for said criteria.

The PBX is conventionally coupled to a plurality of remote home agents 32-38 operating in a SOHO environment. Each home agent 32-38 can access the call centre and, more especially, interact with the host computer 24 (and database 26) and call centre supervisor. Each SOHO will therefore typically comprise a telephone, a personal computer (PC) and standard dedicated hardware to allow the required connection over the integrated service digital network (ISDN) to the PBX of the call centre. Connection of each home agent 32-38 may be by any suitable connection 40, but is typically merely a conventional telephone line (which supports a suitable data transmission protocol). For example, the connections 40 may be wireline (twisted pair, coax or optical) or wireless, with the data transmission protocol being one or a combination of voice telephony, ISDN technology or digital subscriber line (xDSL) in the specific exemplary instance of a twisted pair.

The call centre server 12 is also coupled to the PBX 28 through the LAN 20.

Conventionally, the call centre server will contain a call centre supervisor interface (not shown), with the foregoing description of FIG.1 at this point reflecting conventional call centre architectures.

The preferred embodiment of the present invention further includes a home agent server 50 coupled to LAN 20. The local agent server 50 is shown in its logical location within the call centre architecture 10 of FIG 1, namely intermediate between call centre server 12 and PBX 28, with the local agent server functioning to interact with the PBX 28 and call centre server 12 to administer and control call centre operation, including the allocation and provisioning of fixed agents and home agents (to be described in detail subsequently).

A home agent 32-38 may seek work from the call centre company in two possible ways. Firstly, the home agent 32-38 can notify the call centre supervisor in advance of the time span(s) in which they will be available to work. Secondly, the home agent may decide at any time that they are currently able to work and can immediately register their availability with the call centre. However, should the call centre call load increase beyond levels currently sustainable by fixed and home agents, the preferred embodiment of the present invention makes provision for further suitable and available home agents to be contacted and requested to log on; the process and apparatus by which this is accomplished will now be described.

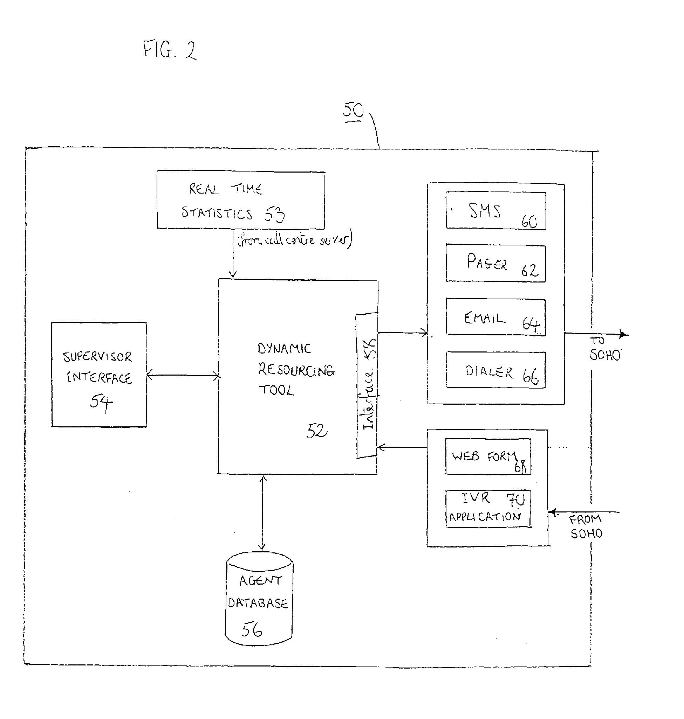

FIG.2 illustrates the architecture of the home agent server 50, according to a preferred embodiment of the present invention. The home agent server 50 contains a dynamic resourcing tool 52 (in the form of control logic, such as implemented code for use with a processor) which is responsive to real-time statistics 53 generated by the call centre server 12. The dynamic resourcing tool 52 performs calculations to determine immediate staffing requirements, having regard to call centre usage and operation. Such calculations may include threshold default levels which, when passed, cause the dynamic resourcing tool 52 to modify its operation to support a change in system loading or operation and therefore to preferably pre-empt but at least react to such changes. The dynamic resourcing tool 52 is configurable by a supervisor via a supervisor interface 54 (such as a keyboard and visual display unit) to support an ability to search for certain home agents, e.g. the most cost effective or the most experienced. The dynamic resourcing tool 52 also functions to report to the supervisor (via the interface 54) real-time agent availability and current staffing requirements within the call centre.

The dynamic resourcing tool 52 is connected to an agent database 56 which stores information about home agents nominally assigned to a resource "pool" of teleworkers. The agent database typically includes information pertaining to:
- Agent names
- Skill-sets and efficiency
- Contact data, e.g. email address, postal address, telephone number, pager number
- Availability for work (which is preferably updated immediately when a change occurs)
- Experience level
- Hourly rate

The agent database 56 may also include the historic information contained in the database 26 associated with the host computer 24. In fact, the system could consolidate the various databases into a single entity accessible as necessary, by the various system components.

The dynamic resourcing tool 52 is coupled to a home agent 32-38 through an interface 58 configured to support various connection techniques (usually supported by modules of code 60-70), such as SMS, PAGING, EMAIL, DIALLED DIGITS, WEB FORM and IVR applications (for example and without limitation).

If a home agent is required to log on to the call centre, then contact is established by one of several possibilities. The dynamic resourcing tool 52 can initiate contact with the home agent via a short message service (SMS), a pager, email or outbound dialling. Of course, operation of the dynamic resourcing tool could also be subject to instruction from the call centre supervisor, but this is less attractive because it may be reactive rather than proactive in nature.

Since the dynamic resourcing tool 52 is responsive to real time statistics 53, such real-time statistics may reflect the nature of the service required by clients. Consequently, knowing the nature of the form of call that needs to be taken, can cause the dynamic resourcing tool 52 to interrogate the agent database 56 to identify a fixed or home teleworker best equipped to answer and quickly despatch the call.

Clearly, this may need home agents to be brought on-line periodically and then released when demand for a particular form of service has risen and subsequently subsided to levels manageable by a smaller pool of agent resources.

The dynamic resourcing tool 52 also receives input from home agents 32-38 concerning their availability for work; such input may be solicited or unsolicited. The input may be in the form of a telephone call which is handled by an interactive voice response (IVR) application or alternatively a completed web form.

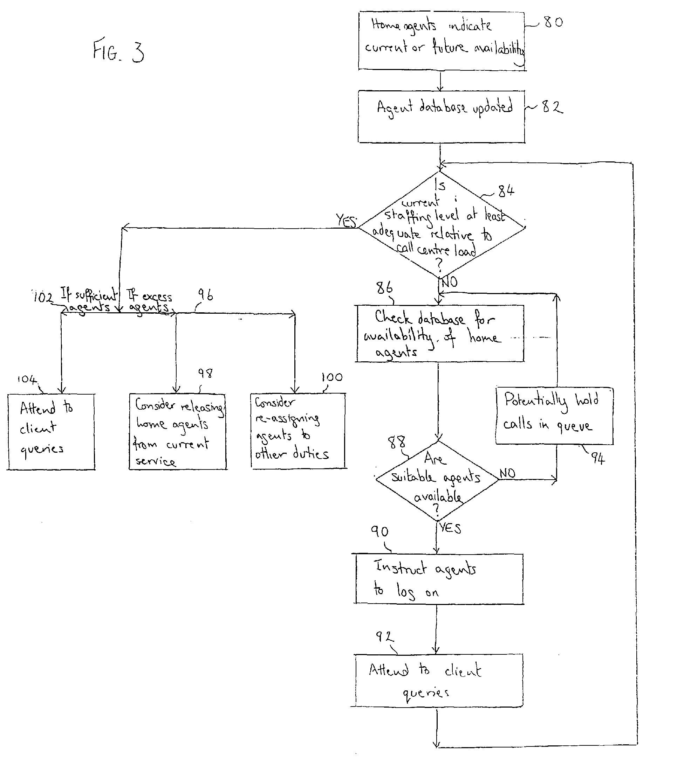

FIG.3 illustrates the method steps for automatically managing and integrating fixed agents 14-18 and home agent resources 32-38 in the context of a call centre according to a preferred embodiment of the present invention. The process is generally continuous (in the sense that system operation is always monitored), with the agent database updated 80 as a result of home agents 32-38 informing the home agent server 50 of their immediate or future availability to work 82. The dynamic resourcing tool 52 (utilising real-time statistics 53 input from the call centre server 12) determines whether the current staffing level is at least adequate 84 in the light of thresholds input, for example, from the supervisor interface 54. Inadequate agent resources lead to the dynamic resource tool 52 checking 86 the agent database 56 for suitable home agents who are currently available for work but are not being presently utilised. If such agents exist 88, they are instructed to log on 90 and will then receive calls 92 routed through the call centre. If, however, there are no suitable agents available then customer calls may be held 94 in a queue.

Another embodiment of the present invention deals with the situation where excess staff resources occur 96 due to an unexpected fall, for example, in calls received by the call centre. Instead of requesting certain home agents to log off 98, the additional resources may be utilised 100 to make solicited or unsolicited outbound calls (for a telemarketing campaign or call-back purposes), i.e. to change certain agents to support different duties 96. Advantageously, such a system increases the flexibility of the call centre.

Clearly, when sufficient numbers of agents are logged on 102 to the system, then client queries can be efficiently processed 104.

The software to manage an automated dynamic resources management system is generally contained within the home agent server 50 which has the dynamic resourcing tool as its main processing engine.

In summary, according to an underlying inventive concept, a system of a preferred embodiment operates to automatically and dynamically manage resources within, and available to, a call centre.

It will be appreciated that the above description has been given by way of example only and that modifications in detail may be made within the scope of the invention. For example, if the call centre load decreases it may be the case that home agents are simply released from service as opposed to being requested to make outbound calls.

It will further be appreciated that the invention applies to all distributed resources management systems for example when a remote agent connects to a multiple set of call centres and works for which ever one needs to be resourced. This practice may be known as work surfing.

The same techniques could be used when accessing different resources other than agents, for example a computer seeking addition resource. In this case a computer may look for example for remote processing power or remote software routines if it has insufficient resources to carry out these independantly. The same processing and management system as described above would be applicable in this case.

The skilled person will see how the distributed resource management system can have many different schemes can use this invention.

In this specification the term agent is intended to include not only people but machines and other articles that can carry out a task.

## Claims

1. A method of managing a distributed resources management system arranged to provision for a level of service supported by local resources and a pool of remote resources, the method comprising:
storing in a database a profile of the local resources and the remote resources;
assessing an operational status of the system in relation to a provision of service to clients; and
automatically adjusting an allocation of local resources and remote resources that support the provision of service subject to the operational status of the system.

2. The method of managing a system of claim 1, further comprising:
automatically adjusting a number of remote resources that support the provision of service to clients based on the operational status of the system.

3. The method of managing a system of claim 2, further comprising at least one of:
a) releasing remote resources when a provisioned level of service exceeds the operational status of the system;
b) re-assigning resources to support system originating duties; and
c) identifying, from the database, available remote resources presently not engaged by the system and instructing such remote resources to connect, thereby making provision for a level of service perceived necessary for the system having regard to the operational status.

4. The method of managing a system of claim 2 or 3, further comprising providing the local and remote resources as local and remote agents and the system is a call centre.

5. The method of managing a system of claim 4, wherein each remote agent has an agent profile and the method further comprises:
selectively engaging a remote agent to augment system capabilities based on its agent profile.

6. The method of managing a system of claim 7, wherein selectively engaging a remote agent is dependent upon at least one of:
home agent hourly rate;
home agent experience level;
home agent efficiency;
home agent skill-set;
home agent contact data; and
instantaneous service demand from clients.

7. The method of managing a system of claims 4 to 6, further comprising:
up-dating the profile in the database upon receipt by a management system of an indication of availability generated by a remote agent.

8. The method of managing a system of any preceding claim, wherein assessing the operational status is determined from at least one of:
real-time statistics for the system; and
instructions entered by a system supervisor.

9. The method of managing a system of claim 8, wherein the real-time statistics include service requirements identified as being demanded by accessing the system.

10. A computer program product for a distributed resources management system, the computer program product comprising:
code that directs the management system to store in a database a profile of local resources and the remote resources;
code that directs the management system to assess an operational status of the system in relation to a provision of service; and
code that directs the management system to adjust automatically an allocation of local resources and remote resources that support the provision of service subject to the operational status of the system.

11. The computer program product according to claim 10, wherein the code that directs the management system to adjust automatically an allocation of local resources and remote resources includes:
code that adjusts automatically a number of remote resources that support the provision of service based on the operational status of the system.

12. The computer program product according to claim 11, wherein the code that directs the management system to adjust automatically an allocation of local resources and remote resources includes at least one of:
a) code that releases remote resources when a provisioned level of service exceeds the operational status of the system;
b) code that re-assigns resources to support system originating duties; and
c) code that both identifies, from the database, available remote resources presently not engaged by the system and instructs such remote resources to log-on to the call centre, thereby making provision for a level of service perceived necessary for the system having regard to the operational status.

13. The computer program product according to claim 10 or claim 11, wherein the local and remote resources are local and remote agent sources and the system is a call centre

14. A computer program article for use in combination with a distributed resources management system and a database arranged to provision for a level of service supported by local resources and a pool of remote resources, comprising:
executable code configured to store in the database a profile of the local resources and the remote resources;
executable code configured to assess an operational status of the system in relation to a provision of service; and
executable code configured to adjust automatically an allocation of local resources and remote resources that support the provision of service subject to the operational status of the system;
wherein the executable codes reside on a tangible medium.

15. The computer program article according to claim 14, wherein the executable code configured to adjust automatically an allocation of local resources and remote resources includes:
executable code configured to adjust automatically a number of remote resources that support the provision of service based on the operational status of the system.

16. The computer program article according to claim 14 or claim 15, wherein the executable code that directs the processor-controlled management system to adjust automatically an allocation of local resources and remote resources includes at least one of:
a) executable code configured to release remote resources when a provisioned level of service exceeds the operational status of the system;
b) executable code configured to re-assign resources to support system originating duties; and
c) executable code configured both to identify, from the database, available remote agent resources presently not engaged by the system and to instruct such remote resources to log on to the system, thereby making provision for a level of service perceived necessary for the system having regard to the operational status.

17. A distributed resources management system operationally configured to receive queries from clients interconnected thereto, the system having available thereto a plurality of local agent resources and a pool of remote agent resources and wherein the system comprises:
a database having stored therein a profile of the local agent resources and the remote agent resources;
a management system arranged to provision for a level of service supported by the local agent resources and the pool of remote agent resources, the management system having:
a resourcing tool for assessing an operational status of the system in relation to a provision of service to clients; and
means for automatically adjusting an allocation of local agent resources and remote agent resources that support the provision of service to clients subject to the operational status of the system.

18. The system of claim 17, wherein the resourcing tool automatically adjusts a number of remote agent resources that support the provision of service to clients based on the operational status of the system.

19. The system of claim 18, wherein the resourcing tool operates to:
a) release remote agent resources when a provisioned level of service exceeds the operational status of the system;
b) re-assign agent resources to support system originating duties; and
c) identify, from the database, available remote agent resources presently not engaged by the system and instruct such remote agent resources to log-on, thereby making provision for a level of service perceived necessary for the system having regard to the operational status.

20. The system of any of claims 17 to 19, wherein the operational status is determined from at least one of:
real-time statistics for the system; and
instructions entered by a system supervisor.

21. The system of claim 20, wherein the real-time statistics include service requirements identified as being demanded by clients accessing the system.

22. The system of claim 18, wherein each remote agent has an agent profile and resourcing tool selectively engages a remote agent to augment system capabilities based on its agent profile.

23. The system of claim 22, wherein the resourcing tool has means for up-dating the profile in the database upon receipt by the management system of an indication of availability generated by a remote agent.

24. The system of any of claims 17 to 23, in the form of a call centre.
